(19) Europäisches Patentamt
European Patent Office
Office européen des brevets

(11) **EP 3 359 467 B1**

(12) **EUROPÄISCHE PATENTSCHRIFT**

(45) Veröffentlichungstag und Bekanntmachung des Hinweises auf die Patenterteilung:
**03.07.2019 Patentblatt 2019/27**

(21) Anmeldenummer: **16777684.8**

(22) Anmeldetag: **05.10.2016**

(51) Int Cl.:
*B65D 81/38* (2006.01)   *B32B 37/12* (2006.01)
*B32B 7/12* (2006.01)   *B32B 15/01* (2006.01)
*B32B 15/08* (2006.01)   *B32B 15/12* (2006.01)
*B32B 27/10* (2006.01)   *B31B 105/00* (2017.01)
*B32B 15/20* (2006.01)

(86) Internationale Anmeldenummer:
**PCT/EP2016/073799**

(87) Internationale Veröffentlichungsnummer:
**WO 2017/060305 (13.04.2017 Gazette 2017/15)**

(54) **MEHRLAGIGES VERBUNDMATERIAL**

MULTI-LAYER COMPOSITE MATERIAL

MATERIAU COMPOSITE MULTICOUCHES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.10.2015 EP 15189126**

(43) Veröffentlichungstag der Anmeldung:
**15.08.2018 Patentblatt 2018/33**

(73) Patentinhaber: **Constantia Teich GmbH**
**3205 Weinburg (AT)**

(72) Erfinder:
• **RESCH, Helmut**
**3203 Rabenstein (AT)**
• **TEUBENBACHER, Jasmin**
**3205 Weinburg (AT)**
• **KORNFELD, Martin**
**3400 Klosterneuburg (AT)**
• **SCHEDL, Adolf**
**3180 Lilienfeld (AT)**
• **KITZBERGER, Robert**
**3140 Pottenbrunn (AT)**

(74) Vertreter: **Patentanwälte Pinter & Weiss OG**
**Prinz-Eugen-Straße 70**
**1040 Wien (AT)**

(56) Entgegenhaltungen:
EP-A1- 2 316 642   US-A1- 2002 015 542
US-A1- 2011 318 552   US-A1- 2013 196 120
US-A1- 2013 206 630

**EP 3 359 467 B1**

**Beschreibung**

Die gegenständliche Erfindung betrifft ein mehrlagiges Verbundmaterial, wobei zumindest eine erste Lage und eine zweite Lage durch ein Kaschiermittel miteinander verbunden sind, sowie ein Verfahren zu dessen Herstellung.

In der Verpackungsindustrie werden oftmals mehrlagige Verbundstoffe als Verpackungsmaterialien eingesetzt. Beispielhaft und nicht abschließend seien hier Verbunde in der Form Aluminium/Papier, Aluminium/Aluminium, Aluminium/Kunststoff oder Aluminium/Papier/Aluminium genannt. Die einzelnen Schichten des Verbundes werden dabei durch Kaschieren miteinander verbunden. Dazu wird zwischen den einzelnen Lagen des Verbundes eine Verbindungsschicht bzw. eine Kaschierschicht aufgebracht, die die beiden Lagen untrennbar miteinander verbindet bzw. verklebt. Untrennbar bedeutet dabei, dass die verbundenen Schichten nach dem Kaschieren nicht mehr zerstörungsfrei getrennt werden können. In der Verpackungsindustrie für Lebensmittel müssen die Materialien für die Kaschierschicht natürlich lebensmittelecht sein und für den Konsumenten unbedenklich sein. Obwohl das Kaschiermittel nicht unmittelbar mit dem Packgut in Kontakt kommt, kann es durch Diffusionsvorgänge, entweder des Packguts und/oder des Kaschiermittels, doch zu Kontakt kommen, weshalb die physiologische Unbedenklichkeit des Kaschiermittels in der Verpackungsindustrie für Lebensmittel unerlässlich ist.

Als Kaschiermittel werden nach heutigem Stand der Technik in der Verpackungsindustrie für Lebensmittel, vorrangig für Wickelverpackungen, unter anderem synthetische Wachse verwendet, die diese Voraussetzungen erfüllen und die in einer Vielzahl am Markt kommerziell erhältlich sind. In solchen Anwendungen wird das synthetische Wachs als Kaschiermittel typischerweise mit einer Dicke von 5 - 50g/m$^2$ aufgetragen.

Synthetische Wachse werden aus Erdöl gewonnen und enthalten immer gewisse Rückstände von Raffinationsbestandteilen. Diese Rückstände sind zwar lebensmitteltechnisch unbedenklich, werden aber vom Konsumenten zum Teil subjektiv wahrgenommen. Wird ein Lebensmittel, z.B. Schokolade, in einem mehrlagigen Verpackungsmaterial mit einem Wachs als Kaschiermittel verpackt, z.B. eingewickelt, kann es aus Sicht eines Konsumenten zu einer geschmacklichen oder olfaktorischen Beeinträchtigung des verpackten Lebensmittels kommen. Es werden daher vermehrt Alternativen für solche synthetischen Wachse gesucht.

Eine mögliche Alternative für synthetische Wachse sind Klebstoffe, von denen es ebenfalls lebensmitteltechnisch unbedenkliche gibt. Grundsätzlich kann man aushärtende und nicht aushärtende Klebstoffe unterscheiden.

Aushärtende Klebstoffe sind physikalisch oder chemisch abbindende Klebstoffe. Aushärtende Klebstoffe reagieren daher nach dem Auftragen entweder durch Strahlung, wie UV-Licht, normales Licht, usw., Temperatur oder Feuchtigkeit, die auch über die Luft aufgenommen werden kann, durch Verdampfen einer wässrigen Phase (Wasser, Lösungsmittel), oder auf andere Weise, beispielsweise durch eine chemische Reaktion, wie bei mehrkomponentigen Klebstoffen typisch. Nach dem Aushärten erreicht der Klebstoff seine finalen Eigenschaften, wie Festigkeit, Verbundhaftung (Adhäsion, Kohäsion), Steifigkeit, usw., wobei der Klebstoff nach dem Aushärten aber nicht mehr klebrig ist. Ein einmal ausgehärteter Klebstoff kann daher nicht nochmals eingesetzt werden. Die US 2013/0196120 A1 beschreibt beispielsweise ein zweilagiges Verbundmaterial, wobei eine erste Lage und eine zweite Lage mittels eines zweikomponentigen Klebstoffes miteinander verbunden sind. Ein nicht aushärtender Klebstoff ist ein Klebstoff ohne Verfestigungsmechanismus und ist folglich permanent klebrig (oder dauerklebrig), d.h. dass ein nicht aushärtender Klebstoff seine Klebrigkeit nicht verliert. Die wesentliche unterscheidende Eigenschaft, ist die Kettenlänge der Molekülketten des Klebstoffes. In einem nicht aushärtenden Klebstoff sind die Molekülketten auch nach dem Trocknen ausreichend kurz, damit der Klebstoff dauerklebrig bleibt. Dahingegen hat ein aushärtender Klebstoff lange bzw. längere Molekülketten, die dem Klebstoff nach dem Aushärten sein Klebrigkeit nehmen. Allerdings ist anzumerken, dass die Unterscheidung in aushärtender und nicht aushärtender Klebstoff nichts hinsichtlich der Hafteigenschaften (Adhäsion, Kohäsion) des Klebstoffes aussagt. Es gibt in beiden Gruppen mehr oder weniger stark und schwach haftende Klebstoffe.

Ob ein Klebstoff ein aushärtender oder nicht aushärtender Klebstoff ist, ergibt sich in der Regel aus den Herstellerangaben zum Klebstoff, beispielsweise aus Datenblättern, Herstellerinformationen, usw. Bei gängigen Klebstoffen ist das auch bekannt. Im Zweifelsfall ließe sich das auch durch einfache Versuche feststellen.

Beide Klebstoffarten werden typischerweise nass appliziert. Der Klebstoff wird dazu in nasser Phase, entweder in Wasser oder einem geeigneten Lösungsmittel, aufgetragen und anschließend getrocknet.

Die im Lebensmittelbereich einsetzbaren Klebstoffe haben unterschiedlichste Eigenschaften und werden daher für die verschiedensten Anwendungsfälle verwendet. Sogenannte druckempfindliche Klebstoffe (pressure sensitive adhesive, PSA), oftmals auch als Haftklebstoffe bezeichnet, entfalten die klebende Wirkung durch einfachen Druck. Ein Haftklebstoff ist ein typischer Vertreter eines nicht aushärtenden Klebstoffs. Solche Klebstoffe sind insbesondere von Anwendungen wie Klebebändern bekannt. Oftmals werden in solchen Anwendungen auch Mischungen als Klebemassen verwendet. Diese Haftklebstoffe unterscheiden sich auch hinsichtlich ihrer Hafteigenschaften (Klebrigkeit), die als Schälfestigkeit (als Widerstand gegen Abschälung vom Substrat auf dem der Klebstoff aufgetragen ist) angegeben werden kann.

Abziehbare Klebstoffe (mit niedriger Schälfestigkeit), meistens ebenfalls in Form von PSA, können nach der Applikation wieder entfernt und in der Regel ein weiteres Mal appliziert werden. Solche abziehbaren Klebstoffe werden beispielsweise verwendet, wenn nach dem Öffnen ein Wiederverschließen der Verpackung erwünscht ist. In einem Verbundmaterial für eine Verpackung sind solche abziehbaren Klebstoffe leicht einsichtig unbrauchbar, da sich das Verbundmaterial in der Verpackung nicht zwischen den Materialschichten trennen lassen soll.

Bei einem abziehbaren Klebstoff bleibt nach dem erstmaligen Öffnen eine Restklebrigkeit erhalten, die einen Wiederverschluss der Verpackung erlaubt. Abziehbare Klebstoffe sollen einen Kohäsionsbruch ermöglichen, bei dem der Klebstoff beim Öffnen an beiden Schichten freigelegt wird. Dabei darf der abziehbare Klebstoff natürlich keine zu starke Verbindung zwischen den Materialschichten bewirken, um ein leichtes Lösen zum Öffnen zu ermöglichen. Das funktioniert aber nicht mit jedem Material. Ein Wiederverschluss bei einem Verbund aus Papier mit einem anderen Material, wie z.B. Aluminium oder Kunststoff, funktioniert mit einem abziehbaren Klebstoff nicht, da durch den Faserausriss am Papier, wobei die Fasern am Klebstoff haften bleiben, die Klebrigkeit des abziehbaren Klebstoffes verloren geht und ein Wiederverschluss nicht mehr möglich ist.

Damit sind zwar einige Klebstoffe aufgrund deren lebensmittelkontaktrechtlichen Eigenschaften prinzipiell geeignet, um in einer Verpackung für Lebensmittel eingesetzt werden zu können, aber nicht alle Klebstoffe sind für alle Materialkombination im mehrlagigen Verbundstoff einsetzbar.

Die DE 1 093 029 A beschreibt eine dauerhaft klebende, druckempfindliche, abziehbare Klebemasse aus einer Mischung eines synthetischen Gummis, wie z.B. Styrol-Butdien, mit einem Polyacrylat haltigen Polymer. Das Ziel der Klebstoffmischung ist, eine gute schalldämpfende Wirkung zu erzielen, wofür der Anteil an synthetischen Gummi größer sein sollte. Demgemäß ist auch eine sehr dicke Schicht der Klebstoffmasse vorgesehen - genannt ist ein Trockengewicht der Klebeschichten von 147 g/dm$^2$, was einer Schichtdicke im Zentimeterbereich entspricht.

Die WO 2013/123230 A1 beschreibt verschiedene Klebstoffmischungen, auch druckempfindliche, die zum Siegeln und auch zum Kaschieren von Vliesgeweben, Papier oder Folien geeignet sind. Es werden aber keine näheren Angaben zu den Eigenschaften der enthaltenen Klebstoffmischungen gemacht.

In der Verpackungsindustrie, insbesondere für Lebensmittel, kommt neben der grundsätzlichen Tauglichkeit des Klebstoffes für die Lebensmittelindustrie noch ein weiteres Problem hinzu. Die Hersteller des Lebensmittels wünschen sich für die Verpackung oftmals eine bestimmte Biegesteifigkeit, oftmals wird auch der Begriff Lappigkeit verwendet. Als Lappigkeit wird dabei im Wesentlichen das Umgekehrte der Biegesteifigkeit des Verpackungsmaterials verstanden, d.h. je steifer umso geringer die Lappigkeit, und umgekehrt, wobei kein linearer Zusammenhang bestehen muss. Die Biegesteifigkeit wird von einem Konsumenten subjektiv mit den Händen wahrgenommen und variiert von einem weichen, sehr biegsamen Material bis hin zu einem sehr steifen Material.

Aufgrund der Vielfalt bei den synthetischen Wachsen, konnte bisher leicht ein Wachs als Kaschiermittel gefunden werden, das in einem bestimmten Verbund, zumindest annähernd, die gewünschte Biegesteifigkeit ergeben hat. Bei der Verwendung von Klebstoffen als Kaschiermittelt ist das nun nicht mehr der Fall, da aufgrund der grundlegenden Eigenschaften der Klebstoffe, insbesondere auch aufgrund der materialbedingten Einschränkung, eine flexible Anpassung der Biegesteifigkeit im für die Lebensmittelindustrie gewünschten Bereich nur schwer bis gar nicht möglich ist. Das grundlegende Problem hierbei ist, dass herkömmliche, in der Verpackungsindustrie für Lebensmittel eingesetzte Klebstoffe in der Regel zu steif sind, was die damit hergestellte Verpackung ebenfalls zu steif macht.

Es ist daher eine Aufgabe der gegenständlichen Erfindung, ein mehrlagiges Verpackungsmaterial mit einer ersten Schicht und einer damit verbundenen zweiten Schicht anzugeben, bei dem die Biegesteifigkeit des Verpackungsmaterials in einem weiten Bereich eingestellt werden kann. Es ist eine weitere Aufgabe, ein Herstellverfahren für ein solches mehrlagiges Verpackungsmaterial anzugeben.

Diese Aufgabe wird erfindungsgemäß dadurch gelöst, dass als Kaschiermittel eine Mischung aus einem ersten, aushärtenden Klebstoff und einem zweiten, nicht aushärtenden Klebstoff vorgesehen ist, wobei eine gewünschte Biegesteifigkeit des Verbundmaterials im Bereich von 50 bis 100mN in Längsrichtung des Verbundmaterials und von 90 bis 120 mN in Querrichtung des Verbundmaterials durch das Mischungsverhältnis der beiden Klebstoffe eingestellt ist, wobei die Biegesteifigkeit des Verbundmaterials sinkt, je mehr zweiter, nicht aushärtender Klebstoff zugesetzt ist. Durch die Verwendung einer solchen Mischung als Kaschiermittel kann die Biegesteifigkeit des Verbundmaterials eingestellt werden und insbesondere an die Bedürfnisse der jeweiligen Verwendung des Verbundmaterials angepasst werden. Abgesehen davon, ermöglicht es das erfindungsgemäße Kaschiermittel, Klebstoffe in Kaschierverfahren einzusetzen, die bisher dafür nicht oder nur bedingt geeignet waren. Damit kann das Verbundmaterial wesentlich flexibler und vielfältiger hergestellt werden. Nicht zuletzt kann durch das erfindungsgemäße Kaschiermittel, gegenüber den bisherigen synthetischen Wachsen, auch deutlich Material eingespart werden, was das erfindungsgemäße Verbundmaterial, bzw. das Herstellverfahren, auch ökologischer, aber auch günstiger, macht. Je nach Anwendung und Aufbau des Verbundmaterials kann das Mischungsverhältnis in einem breiten Bereich variieren, ohne die Eignung des Verbundmaterials als Verpackungsmaterial oder das Herstellverfahren negativ zu beeinträchtigen.

Nicht zuletzt können damit Verbundmaterialien aus Lagen mit den verschiedensten Materialen, insbesondere Papier, Aluminium oder Kunststoff, hergestellt werden.

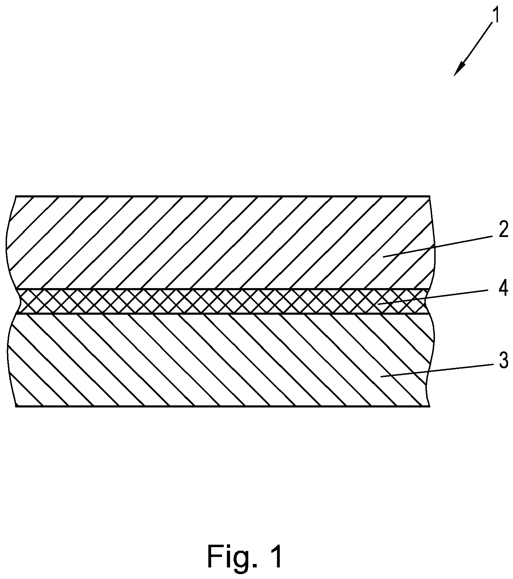

Die gegenständliche Erfindung wird nachfolgend unter Bezugnahme auf die Figur 1 näher erläutert, die beispielhaft, schematisch und nicht einschränkend vorteilhafte Ausgestaltungen der Erfindung zeigen. Dabei zeigt

Fig.1 ein erfindungsgemäßes mehrlagiges Verbundmaterial mit zwei kaschierten Lagen.

In Fig.1 ist ein mehrlagiges, hier zweilagiges, Verbundmaterial 1 dargestellt. Das Verbundmaterial 1 ist dabei im Rohzustand in der Regel in einer gewissen Breite auf einer Rolle aufgerollt und wird von der Rolle weg verarbeitet, z.B. geschnitten und einer Verpackungsmaschine zugeführt. Das Verbundmaterial 1 besteht aus einer ersten Lage 2 und einer zweiten Lage 3, wobei die beiden Lagen 2, 3 mittels einer Kaschierschicht 4 miteinander verbunden sind. Die erste Lage 2 und zweite Lage 3 sind bevorzugt aus Aluminium, Papier oder einem Kunststoff, oder einer Kombination dieser Materialien in Form eines Laminats. Das Kaschieren von zwei Lagen 2, 3 ist ein hinlänglich bekanntes Verfahren. Grundsätzlich wird zwischen einer Nasskaschierung und einer Trockenkaschierung unterschieden. In beiden Fällen wird das Kaschiermittel in flüssiger Form auf zumindest eine der beiden Lagen 2, 3 aufgetragen wird, z.B. durch Aufwalzen, Aufsprühen, etc.

Beim Trockenkaschieren wird das aufgetragene Kaschiermittel danach getrocknet und danach werden die beiden Lagen 2, 3 verbunden (kaschiert), indem diese aneinandergepresst werden. Das Trockenkaschieren bedingt damit, dass das Kaschiermittel nach dem Trocknen entweder dauerklebrig (nicht aushärtender Klebstoff) ist oder noch ausreichend klebrig ist, weil der aushärtende Klebstoff noch nicht gänzlich ausgehärtet ist.

Beim Nasskaschieren wird hingegen im nassen Zustand kaschiert, d.h., die beiden Lagen 2, 3 werden aneinander gepresst während das Kaschiermittel noch nass ist. Erst danach wird der hergestellte Verbund getrocknet. Damit wird aber die Handhabung des kaschierten Verbundmaterials 1 schwieriger, da sich die Hafteigenschaften des Klebstoffes erst nach dem Trocknen einstellen, womit sich zwischen dem Kaschieren und dem Abschluss des Trockenvorganges die beiden Lagen 2, 3 noch verschieben können. Zum Nasskaschieren kommen sowohl nicht aushärtende, als auch aushärtende Klebstoffe als Kaschiermittel zum Einsatz. Beim Nasskaschieren ist es auch wichtig, dass die flüssige Phase (Wasser, Lösungsmittel) während des Trockenvorganges abgeführt werden kann. Damit muss das Wasser oder Lösungsmittel während des Trockenvorganges durch eine der beiden Lagen 2, 3 durchdiffundieren können, da es ansonsten zu einer Bläschenbildung an der Oberfläche des Verbundmaterials 1 kommen kann, was das Verbundmaterial 1 unbrauchbaren machen würde. Das bedingt, dass zumindest eine der beiden Lagen 2, 3 aus Papier sein muss, dass diffusionsoffen ist. Beim Nasskaschieren ist somit die mögliche Materialkombination eingeschränkt.

Nach dem Kaschieren sollen sich die beiden kaschierten Lagen 2, 3 nicht mehr ohne Zerstörung des Verbundmaterials 1 voneinander trennen lassen.

Anstelle eines zweilagigen Verbundmaterials 1 kann natürlich auch ein Verbundmaterial 1 mit mehr als zwei Lagen 2, 3 vorgesehen sein, wobei zumindest eine erste Lage 2 mit einer benachbarten zweiten Lage 3 wie nachfolgend beschrieben, erfindungsgemäß kaschiert wird. Weiters sei angemerkt, dass eine Lage 2, 3 selbst wieder ein Laminat, beispielsweise aus Aluminium, Papier und/oder Kunststoff, sein könnte.

Die Dicken der ersten und zweiten Lage 2, 3 des Verbundmaterials 1 können in einem breiten Bereich variieren, je nach Einsatzzweck. Anstelle einer Dicke wird gleichwertig auch oftmals ein Flächengewicht einer Lage 2, 3 in $g/m^2$ angegeben, woraus sich die Dicke der Lage 2, 3 ergibt. Typische Lagendicken in der Verpackungsindustrie für Lebensmittels sind beispielsweise für Aluminium von 6 $\mu m$ bis 50 $\mu m$, für Papier von 18 $g/m^2$ bis 50$g/m^2$ und für Kunststoff von 5 $\mu m$ bis 50 $\mu m$.

Als Papierlage wird für Verpackungen in der Lebensmittelindustrie häufig eine sogenannte Kaschierseide mit einem Flächengewicht von 20 bis 30$g/m^2$, ein fettfestes Papier in Form von Pergament oder Pergamentersatz, ein sogenanntes Kraftpapier mit einem Flächengewicht von > 30$g/m^2$ oder auch ein sogenanntes gestrichenes Papier mit einer Beschichtung, meistens an der der Kaschierseite abgewandten Fläche.

Als Kaschiermittel für die Kaschierschicht 4 wird erfindungsgemäß eine Mischung aus einem ersten aushärtenden Klebstoff und einem zweiten nicht aushärtenden Klebstoff, die beide natürlich lebensmitteltauglich sein müssen, verwendet.

Das erfindungsgemäße Kaschiermittel wird für die Anwendung in der Verpackungsindustrie mit Lagendicken im Bereich von 0,5 $g/m^2$ bis 8 $g/m^2$ aufgetragen. Damit kommt man, verglichen zu synthetischen Wachsen, mit wesentlich weniger Kaschiermittel aus, was aus ökologischen Gründen besonders vorteilhaft ist, aber auch einen erheblichen Kostenvorteil mit sich bringt.

Als erster aushärtender Klebstoff kommen Klebstoffe auf Basis von Thermoplastischen Elastomeren, beispielsweise Klebstoffe auf Polyolefin Basis, Klebstoffe als Styrol-Blockcopolymer oder als Ethylenvinylacetat (EVA) Copolymer. Beispiele für solche Klebstoffe sind Styrol Butadien haltige Klebstoffe oder Ethylenvinylacetat (EVA) Copolymer mit einem Vinylacetatanteil bis zu 28%. Ebenso kommen Thermoplaste in Frage, beispielsweise Polyacrylat haltige Klebstoffe oder Ethylen-Copolymerisate, wie z.B. Ethylen-Acrylsäure (EAA).

Der erste Klebstoff liegt in der Regel in flüssiger Form vor, beispielsweise als Lösung, Emulsion oder Dispersion des ersten Klebstoffs in einer flüssigen Phase, beispielsweise Wasser oder ein geeigneten flüssiges Lösungsmittel. Der erste Klebstoff kann einkomponentig sein, kann aber auch ein mehrkomponentiger Klebstoff sein.

Als zweiter nicht aushärtender Klebstoff kommen Klebstoffe auf Basis von Thermoplastischen Elastomeren, beispielsweise Klebstoffe auf Polyolefin Basis, Klebstoffe als Styrol-Blockcopolymer oder als Ethylenvinylacetat (EVA) Copolymer. Beispiele für solche Klebstoffe sind Styrol Butadien haltige Klebstoffe oder Ethylenvinylacetat (EVA) Copolymer mit einem Vinylacetatanteil bis zu 28%. Als zweiter nicht aushärtender Klebstoff kann insbesondere ein Haftklebstoff bzw. ein druckempfindlicher Klebstoff verwendet werden. Gängige druckempfindliche Klebstoffe sind niedermolekulare Polyacrylat haltige Klebstoffe oder Styrol Butadien haltige Klebstoff.

Auch der zweite Klebstoff liegt in der Regel in flüssiger Form vor, beispielsweise als Lösung, Emulsion oder Dispersion des zweiten Klebstoffs in einer flüssigen Phase, beispielsweise Wasser oder ein geeigneten flüssiges Lösungsmittel.

Als Styrol Butadien haltiger Klebstoff wird insbesondere ein Klebstoff verstanden, der 60% bis 80% (Gewichtsanteil) Styrol Butadien enthält. Als Polyacrylat haltiger Klebstoff wird erfindungsgemäß ein Klebstoff verstanden, der 50% bis 90% (Gewichtsanteil) Polyacrylat enthält. Diese Anteile sind nicht auf die Dispersion bezogen, sondern beziehen sich auf den Feststoffgehalt der Klebstoffe.

Die Mischung der beiden Klebstoffe liegt folglich ebenfalls in flüssige Form vor, wobei die flüssigen Phasen der beiden Klebstoffe natürlich verträglich sein müssen. Vorzugsweise wird für beide Klebstoffe dieselbe flüssige Phase verwendet, beispielsweise Wasser oder dasselbe Lösungsmittel. Der Mischung der beiden Klebstoffe kann zur Verarbeitung zusätzlich Wasser zugefügt werden kann. Ebenso können der Mischung in geringen Mengen, typischerweise in Summe maximal 10% bezogen auf das Gewicht der flüssigen Mischung auch geeignete Zusatzstoffe zugefügt werden, beispielsweise Stabilisatoren (max. 2%), Füllstoffe (max.10%) und/oder Entschäumer (max. 1%).

Der erste, aushärtende Klebstoff bringt im trockenen Zustand bei der Verwendungstemperatur eine bestimmte Biegesteifigkeit (Lappigkeit) mit. Für viele Verpackungslösungen im Lebensmittelbereich ist die damit erzielte Biegesteifigkeit des Verbundmaterials 1 allerdings zu hoch. Um die Biegesteifigkeit auf einen gewünschten Wert einzustellen, wird dem ersten, aushärtenden Klebstoff nun der zweite, nicht aushärtende Klebstoff zugemischt. Mit dem zweiten, nicht aushärtenden Klebstoff wird die Biegesteifigkeit des Verbundmaterials 1 eingestellt. Damit wird die Eigenschaft nicht aushärtender Klebstoffe ausgenutzt, dass diese im trockenen Zustand nur eine sehr geringe Biegesteifigkeit besitzen.

An der Biegesteifigkeit des Verbundmaterials 1 sind natürlich alle Schichten des Verbundmaterials 1 beteiligt. Über das Kaschiermittel hat man nun, bei gegebenem Schichtaufbau (Anzahl der Lagen, Material der Lagen, Dicken der Lagen, Dicke der Kaschierschicht 4) des Verbundmaterials 1, die Möglichkeit darauf Einfluss zu nehmen.

Das Mischungsverhältnis M von ersten, aushärtenden Klebstoff und zweiten, nicht aushärtende Klebstoff im Kaschiermittel kann dabei erfindungsgemäß je nach Anwendung und Materialauswahl in einem sehr breiten Bereich variieren. Hierbei sind Mischungsverhältnisse M zwischen den beiden Klebstoffen im Bereich von 10% erster, aushärtender Klebstoff zu 90 % zweiter, nicht aushärtender Klebstoff bis 90% erster, aushärtender Klebstoff zu 10 % zweiter, nicht aushärtender Klebstoff möglich. Das Mischungsverhältnis M ist auf den Feststoffgehalt der Klebstoffe bezogen.

Beide Klebstoffe werden in der Regel einzeln in flüssiger Form verarbeitet, entweder durch Trockenkaschieren oder Nasskaschieren. Hier war es schon überraschend, dass auch die Mischung der beiden Klebstoffe ausreichend stabil ist (keine Sedimentation, Entmischung, Trennung der verschiedenen Phasen), um in einem industriellen Produktionsprozess verwendet werden zu können. Nach dem Auftragen des Klebstoffs wird die Flüssigkeit durch Erhitzen verdampft und es bleibt die getrocknete Klebstoffschicht übrig. Während ein nicht aushärtender Klebstoff nach dem Trocknen an der Oberfläche klebrig bleibt, bildet ein aushärtender Klebstoff nach dem Trocknen eine trockene, nicht klebrige Oberfläche aus. Aufgrund dieser sehr unterschiedlichen grundlegenden Eigenschaften der beiden Klebstoffe, war es auch deshalb überraschend, dass auch eine Mischung dieser beiden Klebstoffe ein funktionierendes Kaschiermittel ergibt und die Verarbeitung in einem industriellen Produktionsprozess möglich ist. Ganz im Gegenteil wurde festgestellt, dass gerade diese unterschiedlichen Eigenschaften der beiden Klebstoffe die Mischung aber besonders interessant macht.

Das erfindungsgemäße Kaschiermittel als Mischung eines ersten, aushärtenden Klebstoffes und eines zweiten, nicht-aushärtenden Klebstoffes kann sowohl im Trockenkaschierverfahren, als auch im Naschkaschierverfahren verarbeitet werden. Das Trockenkaschierverfahren wird dabei unterstützt, da durch den Anteil des zweiten, nicht aushärtenden Klebstoffes die getrocknete Kaschiermittelschicht ausreichend klebrig ist, um die beiden Lagen 2, 3 zu kaschieren. Auch ein Nasskaschierverfahren wird durch das erfindungsgemäße Kaschiermittel unterstützt. Bis zum Abschluss des Trocknungsvorganges sind die Hafteigenschaften des aushärtenden Klebstoffes möglicherweise noch nicht ausreichend ausgebildet, weshalb das noch nicht trockene, aber bereits kaschierte Verbundmaterial 1 schwierig zu handhaben ist, da sich die beiden Lagen 2, 3 noch verschieben können. Der Anteil an zweiten, nicht aushärtenden Klebstoff sorgt nun dafür, dass sich bereits im nassen Zustand eine ausreichende Haftung zwischen den beiden Lagen 2, 3 einstellt, um ein Verschieben der beiden Lagen 2, 3 zu verhindern.

Eine Klebeschicht aus einem nicht aushärtenden Klebstoff ist weich mit einer geringen Biegesteifigkeit. Eine Klebeschicht aus einem aushärtenden Klebstoff ist dahingegen relativ steif und unflexibel. Die Mischung der beiden Klebstoffe erlaubt nun zusätzlich die Einstellung der gewünschten Biegesteifigkeit des Verbundmaterials 1.

Die für die Erfindung wesentlichsten überraschenden Erkenntnisse waren daher, dass die Mischung in einem breiten Mischungsverhältnis als Kaschiermittel, sowohl in einem Trockenkaschierverfahren, als auch in einem Nasskaschierverfahren hervorragend funktioniert und dass es möglich ist, über das Mischungsverhältnis, die Biegesteifigkeit des mehrlagigen Verbundmaterials 1, das selbst in vielfältiger Ausgestaltung vorliegen kann, gemäß vorgegebener Anforderungen einzustellen, ohne den Verbund der beiden Lagen im Verbundmaterial 1 zu beeinflussen. Das bedeutet insbesondere, dass das Verbundmaterial 1 nach dem Kaschieren nicht mehr zerstörungsfrei getrennt werden kann. Die Einstellung der Biegesteifigkeit funktioniert dabei auch für die eingangs genannten Materialien in den angegebenen Materialdickenbereichen.

Die Biegesteifigkeit des Verbundmaterials 1 wird auf Basis der Norm DIN 53121 bestimmt, entweder im darin beschriebenen Zweipunktverfahren oder im darin beschriebenen Vierpunktverfahren. Dabei kann die Biegesteifigkeit B entweder gleichwertig als spezifische Biegesteifigkeit $B_S$ in Nm oder als Biegekraft $B_F$ in N angegeben werden.

Das Vorgehen zur Bestimmung der Biegesteifigkeit des Verbundmaterials 1 wird am Beispiel einer Zweipunktmessung beschrieben. Eine einseitig eingespannte Probe des Verbundmaterials 1 wird in einem bestimmten Abstand I von einer drehbaren Einspannung durch eine senkrecht auf die Probenoberfläche wirkende Biegekraft F beansprucht, bis ein vorgegebener Biegewinkel $\alpha$ der Probe erreicht ist. Die Verformungsgeschwindigkeit bis zum Erreichen des Biegewinkels $\alpha$ wird dabei konstant gehalten. Der maximale Widerstand, den die Probe diesem Biegen entgegensetzt, wird als Biegesteifigkeit gemessen. Im Wesentlichen wird die Biegekraft $B_F$ gemessen, die notwendig ist, um die Probe um den Biegewinkel $\alpha$ zu verbiegen. Daraus kann dann aus dem Zusammenhang $B_S = \dfrac{60}{\pi} \dfrac{B_F l^2}{\alpha b}$ auf die spezifische Biegesteifigkeit $B_S$ umgerechnet werden. Als Messbedingungen werden z.B. ein Biegewinkel $\alpha$ von 10°, eine Probenbreite b von 15mm und ein Abstand I von Einspannung zum Kraftangriff von 1mm festgelegt. Messgeräte zur Bestimmung der Biegesteifigkeit B sind kommerziell erhältlich, z.B. von der Firma Lorentzen & Wettre.

Die Biegesteifigkeit B kann dabei auch in den beiden Flächenrichtungen des Verbundmaterials 1, in Längsrichtung und in Querrichtung, separat ermittelt werden. Als Längsrichtung wird beispielsweise die Abrollrichtung des Verbundmaterials 1 von einer Rolle angesehen und als Querrichtung die um 90° zur Längsrichtung verdrehte Richtung.

Wie hinlänglich bekannt ist, weisen bandförmige Materialien, wie beispielsweise Papier, Aluminium, Kunststoff, wie sie in einem Verbundmaterial 1 eingesetzt und kaschiert werden, in der Regel herstellbedingt in verschiedenen Richtungen (Maschinenrichtung bzw. Längsrichtung und quer dazu) verschiedene Eigenschaften auf. Beim Papier ist das beispielsweise eine Folge der herstellbedingten Faserlage der Papierfasern. Bei Aluminium ergeben sich die unterschiedlichen Eigenschaften beispielsweise aus der Walzrichtung und bei Kunststoffen beispielsweise aus der üblichen Verstreckung. Obwohl die Kaschierschicht 4 hinsichtlich der Eigenschaften isotrop ist, ergeben sich im Verbundmaterial 1 demnach in den verschiedenen Richtungen trotzdem unterschiedliche Eigenschaften, insbesondere unterschiedliche Biegesteifigkeiten, in Längsrichtung und Querrichtung.

Zum Einstellen der gewünschten Biegesteifigkeit B des Verbundmaterials 1 über das Mischungsverhältnis M der beiden verschiedenen Klebstoffe im Kaschiermittel kann z.B. für ein bestimmtes Verbundmaterial 1 (Anzahl der Lagen, Material der Lagen, Dicken der Lagen, Dicke der Kaschierschicht 4) eine Testreihe angesetzt werden und für verschiedene Mischverhältnisse M die Biegesteifigkeit B gemessen werden. Dabei gilt der allgemeine Zusammenhang, dass die Biegesteifigkeit B des Verbundmaterials 1 abnimmt, je mehr zweiter, nicht aushärtender Klebstoff zugesetzt wird. Das ist beispielhaft anhand der nachfolgenden Ausführungsbeispiele beschrieben.

Für ein konkretes erstes Ausführungsbeispiel wurde ein kommerziell erhältlicher erster, aushärtender Klebstoff in Form eines Styrol Butadien haltigen Klebstoffs mit der Produktbezeichnung LANDOCOL 7185 Firma Svenska Lim AB und ein kommerziell erhältlicher zweiter, nicht aushärtender Klebstoff in Form eines Polyacrylat haltiger Klebstoff mit der Produktbezeichnung AQUENCE ENV 1626-24 der Firma Henkel in bestimmten Mischungsverhältnissen M (bezogen auf die Klebstoffmassen) als wässrige Lösung gemischt. Das Verbundmaterial 1 war ein zweilagiger Aluminium/Papier (Kaschierseide) Verbund, mit einer Aluminiumdicke von 7,8$\mu$m und einer Kaschierseide mit einem Flächengewicht von 20g/m$^2$. Das Kaschiermittel wurde jeweils mit einem Flächengewicht von 0,7g/m$^2$ aufgetragen. Für die Messung der Biegesteifigkeit B wurde eine Probe des Verbundmaterials mit einer Breite b von 15mm verwendet. Der Abstand I des Kraftangriffspunktes zur Einspannung wurde mit 1mm gewählt. Die Biegesteifigkeit B wurde sowohl in Längs- als auch in Querrichtung des Verbundmaterials 1 gemessen. Die Biegesteifigkeit B wurde bei einem Biegewinkel $\alpha$ von 30° als Biegekraft $B_F$ in mN gemessen. Die Messung wurde bei Raumtemperatur von ungefähr 22°C durchgeführt. Für jeden Messwert in der Tabelle 1 wurden fünf Messungen gemacht, die dann gemittelt wurden.

Tabelle 1 - Ausführungsbeispiel 1

| Mischverhältnis | Erster Klebstoff | Zweiter Klebstoff | Biegesteifigkeit B (hier Biegekraft F [mN]) | |
|---|---|---|---|---|
| | Landocol 7185 | Aquence ENV 1626-24 | Längs | Quer |
| M1 | 0% | 100% | 56 | 82 |
| M2 | 20% | 80% | 66 | 80 |

(fortgesetzt)

| Mischverhältnis | Erster Klebstoff | Zweiter Klebstoff | Biegesteifigkeit B (hier Biegekraft F [mN]) | |
|---|---|---|---|---|
| | Landocol 7185 | Aquence ENV 1626-24 | Längs | Quer |
| M3 | 50% | 50% | 84 | 103 |
| M4 | 62,5% | 37,5% | 102 | 121 |

Die obige Tabelle demonstriert eindeutig den Einfluss des Mischungsverhältnisses M auf die sich einstellende Biegesteifigkeit B des Verbundmaterials 1. Insbesondere kann daraus auch abgelesen werden, dass die Biegesteifigkeit B des Verbundmaterials 1 abnimmt, wenn mehr zweiter, nicht aushärtender Klebstoff im Kaschiermittel vorhanden ist.

In einem zweiten Ausführungsbeispiel wurde als erster, aushärtender Klebstoff der Kleber Loctite Liofol LW 9112 der Fa. Henkel verwendet, der mit AQUENCE ENV 1626-24 als zweiter, nicht aushärtender Klebstoff gemischt wurde. Ansonsten sind der Aufbau des Verbundmaterials 1 und das Messverfahren gleich wie im ersten Ausführungsbeispiel.

Tabelle 2 - Ausführungsbeispiel 2

| Mischverhältnis | Erster Klebstoff | Zweiter Klebstoff | Biegesteifigkeit B (hier Biegekraft F [mN]) | |
|---|---|---|---|---|
| | Loctite Liofol LW 9112 | Aquence ENV 1626-24 | Längs | Quer |
| M1 | 62,5% | 37,5% | 102 | 121 |
| M2 | 100% | 0% | 109 | 126 |

Für ein vorgegebenes Verbundmaterial 1 kann daher über das Mischungsverhältnis M die gewünschte Biegesteifigkeit B über eine solche Testreihe eingestellt werden. Selbstverständlich kann damit in gleicher Weise auch die Biegesteifigkeit B eines Verbundmaterials 1 mit mehr als zwei Lagen 2, 3 und auch für ein Verbundmaterial mit einem Laminat als erste und/oder zweite Lage 2, 3 eingestellt werden.

Für die Verwendung des Verbundmaterials 1 in der Verpackungsindustrie für Lebensmittel sind folgende Bereiche der Biegesteifigkeit B besonders interessant: Längs von 50 bis 100 mN und Quer von 90 bis 120 mN (gemessen mit dem Verfahren wie im Ausführungsbeispiel 1 beschrieben).

Mittels Infrarot Spektroskopie, gegebenenfalls zusätzlich mit thermogravimetrischer Analyse oder mikrokalorimetrischer Analyse, kann anhand eines gegebenen Verbundmaterials 1 auch rückgeschlossen werden, ob in einer Kaschierschicht 4 eine erfindungsgemäße Mischung zweier Klebstoffe vorliegt und in welchen Mischungsverhältnis M diese gemischt wurden.

**Patentansprüche**

1. Mehrlagiges Verbundmaterial, wobei zumindest eine erste Lage (2) und eine zweite Lage (3) durch ein Kaschiermittel miteinander verbunden sind, **dadurch gekennzeichnet, dass** als Kaschiermittel eine Mischung aus einem ersten, aushärtenden Klebstoff und einem zweiten, nicht aushärtenden Klebstoff vorgesehen ist, wobei eine gewünschte Biegesteifigkeit (B) des Verbundmaterials (1) im Bereich von 50 bis 100mN in Längsrichtung des Verbundmaterials (1) und von 90 bis 120mN in Querrichtung des Verbundmaterials (1) durch das Mischungsverhältnis (M) der beiden Klebstoffe eingestellt ist, wobei die Biegesteifigkeit des Verbundmaterials (1) sinkt, je mehr zweiter, nicht aushärtender Klebstoff zugesetzt ist.

2. Mehrlagiges Verbundmaterial nach Anspruch 1, **dadurch gekennzeichnet, dass** das Mischungsverhältnis (M) zwischen 10% erster, aushärtender Klebstoff zu 90 % zweiter, nicht aushärtender Klebstoff bis 90% erster, aushärtender Klebstoff zu 10 % zweiter, nicht aushärtender Klebstoff eingestellt ist.

3. Mehrlagiges Verbundmaterial nach Anspruch 1, **dadurch gekennzeichnet, dass** die erste Lage (2) und/oder die zweite Lage (3) eine Lage aus Papier, Aluminium oder Kunststoff, oder eine Lage aus einem Laminat aus Papier, Aluminium und/oder Kunststoff, ist.

4. Verfahren zum Herstellen eines mehrlagigen Verbundmaterials (1), wobei zumindest eine erste Lage (2) mit einer zweiten Lage (3) mittels eines Kaschiermittels miteinander verbunden wird, **dadurch gekennzeichnet, dass** ein erster, aushärtender Klebstoff und ein zweiter, nicht aushärtender Klebstoff zum Kaschiermittel vermischt werden und dabei über das Mischungsverhältnis (M) der beiden Klebstoffe eine gewünschte Biegesteifigkeit (B) des Verbundmaterials (1) im Bereich von 50 bis 100mN in Längsrichtung und von 90 bis 120mN in Querrichtung des Verbundmaterials (1) eingestellt wird, wobei die Biegesteifigkeit des Verbundmaterials (1) sinkt, je mehr zweiter, nicht aushärtender Klebstoff zugesetzt wird.

5. Verfahren nach Anspruch 4, **dadurch gekennzeichnet, dass** das Mischungsverhältnis (M) zwischen 10% erster, aushärtender Klebstoff zu 90 % zweiter, nicht aushärtender Klebstoff bis 90% erster, aushärtender Klebstoff zu 10 % zweiter, nicht aushärtender Klebstoff eingestellt wird.

## Claims

1. A multi-ply composite material, wherein at least a first ply (2) and a second ply (3) are connected to one another by a laminating agent, **characterized in that** a mixture of a first, curing adhesive and a second, non-curing adhesive is provided as laminating agent, wherein a required bending stiffness (B) of the composite material (1) in the range from 50 to 100 mN in the longitudinal direction of the composite material (1) and from 90 to 120 mN in the transverse direction of the composite material (1) is set by the mixing ratio (M) of the two adhesives, wherein the bending stiffness of the composite material (1) declines, the more second, non-curing adhesive is added.

2. The multi-ply composite material according to claim 1, **characterized in that** the mixing ratio (M) is set between the two adhesives in the range from 10% of first, curing adhesive to 90% of second, non-curing adhesive up to 90% of first, curing adhesive to 10% of second, non-curing adhesive.

3. The multi-ply composite material according to claim 1, **characterized in that** the first ply (2) and/or the second ply (3) is a ply made of paper, aluminum or plastic, or a ply consisting of a laminate made of paper, aluminum and/or plastic.

4. A method for producing a multi-ply composite material (1), wherein at least a first ply (2) and a second ply (3) are connected to one another by means of a laminating agent **characterized in that** a first, curing adhesive and a second, non-curing adhesive are mixed as the laminating agent and wherein a required bending stiffness (B) of the composite material (1) in the range from 50 to 100 mN in the longitudinal direction and from 90 to 120 mN in the transverse direction of the composite material (1) is set by means of the mixing ratio (M) of the two adhesives, wherein the bending stiffness of the composite material (1) declines, the more second, non-curing adhesive is added.

5. The method according to claim 4, **characterized in that** the mixing ratio (M) is set between the two adhesives in the range from 10% of first, curing adhesive to 90% of second, non-curing adhesive up to 90% of first, curing adhesive to 10% of second, non-curing adhesive.

## Revendications

1. Matériau composite multicouche, dans lequel au moins une première couche (2) et une seconde couche (3) sont reliées entre elles par un agent de contrecollage, **caractérisé en ce qu'**un mélange d'un premier adhésif durcissant et d'un second adhésif non durcissant est prévu comme agent de contrecollage, dans lequel une rigidité en flexion souhaitée (B) du matériau composite (1) est réglée dans la plage de 50 à 100 mN dans la direction longitudinale du matériau composite (1) et de 90 à 120 mN dans la direction transversale du matériau composite (1) par le rapport de mélange (M) des deux adhésifs, la rigidité en flexion du matériau composite (1) diminuant en fonction de l'ajout de second adhésif non durcissant.

2. Matériau composite multicouche selon la revendication 1, **caractérisé en ce que** le rapport de mélange (M) est réglé entre 10 % de premier adhésif durcissant contre 90 % de second adhésif non durcissant et 90 % de premier adhésif durcissant contre 10 % de second adhésif non durcissant.

3. Matériau composite multicouche selon la revendication 1, **caractérisé en ce que** la première couche (2) et/ou la seconde couche (3) est une couche de papier, d'aluminium ou de plastique, ou une couche d'un stratifié de papier, d'aluminium et/ou de plastique.

4. Procédé de fabrication d'un matériau composite multicouche (1), dans lequel au moins une première couche (2) et une seconde couche (3) sont reliées entre elles par un agent de contrecollage, **caractérisé en ce qu'**un premier adhésif durcissant et un second adhésif non durcissant sont mélangés avec l'agent de contrecollage et qu'une rigidité en flexion (B) souhaitée du matériau composite (1) est ainsi réglée, par le rapport de mélange (M) des deux adhésifs, dans la plage de 50 à 100 mN dans la direction longitudinale et de 90 à 120 mN dans la direction transversale du matériau composite (1), la rigidité en flexion du matériau composite (1) diminuant en fonction de l'ajout de second adhésif non durcissant.

5. Procédé selon la revendication 4, **caractérisé en ce que** le rapport de mélange (M) est réglé entre 10 % de premier adhésif durcissant contre 90 % de second adhésif non durcissant et 90 % de premier adhésif durcissant contre 10 % de second adhésif non durcissant.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20130196120 A1
- DE 1093029 A
- WO 2013123230 A1